# EUROPÄISCHE PATENTANMELDUNG

(11) **EP 3 015 243 A1**
(43) Veröffentlichungstag der Anmeldung: **04.05.2016**
(21) Anmeldenummer: 14191426.7
(22) Anmeldetag: 03.11.2014
(51) Int. Cl.: B29C 47/08, B29C 43/58, B29C 47/92, B29C 43/24, B29C 47/16

(54) **Vorrichtung zur Herstellung und Glättung von Kunststofffolien bzw. Kunststoffplatten**

(71) Anmelder: Starlinger & Co. Gesellschaft m.b.H., 1060 Wien (AT)
(72) Erfinder: Haindl, Jürgen, 4174 Niederwaldkirchen (AT); Höller, Harald, 4170 Haslach (AT); Fellinger, Markus, 4073 Wilhering (AT)
(74) Vertreter: Schwarz & Partner

(57) **Zusammenfassung**

Die Glättvorrichtung für Kunststofffolien umfasst Kunststoffschmelze-Erzeugungsmittel (1, 5), eine verstellbare Breitschlitzdüse (10), und ein Walzenglättwerk (16) mit gekühlten Glättwalzen (11, 12), die zwischen einander einen verstellbaren Glättspalt (13) bilden. Optional sind weitere Kühlwalzen (15) nachgeschaltet. Ein Dickenmesser (23) misst die Dicke der Kunststofffolienbahn (22). Einem Regler (30) zur Regelung der Dicke der Kunststofffolienbahn (22) ist eine Soll-Dicke (SD) der Kunststofffolienbahn (22) und der Volumenstrom (SS) der Kunststoffschmelze oder die Liniengeschwindigkeit (LS) einstellbar. Der Regler (30) erfasst die akuellen Drehmomente und Drehzahlen der Walzen (11, 12, 15) und die aktuelle Dicke (FD, FD1-FDn) der Kunststofffolienbahn (22).

Der Regler (30) sendet aus den erfassten Drehmomenten der Walzen (11, 12, 15) errechnete Soll-Drehzahlsignale (COS, C2S-CnS, CAS) an die Antriebe der Walzen und ein Glättspalt-Soll-Abstandssignal (GW) zur Verstellung des Glättspalts (13), weiters - bei vorgegebener Liniengeschwindigkeit (LS) - Soll-Kunststoffschmelze-Volumenstromsignale (SS) an die Kunststoffschmelze-Erzeugungsmittel, oder - bei vorgegebenem Kunststoffschmelze-Volumenstrom (SS) - Soll-Liniengeschwindigkeitssignale (LS) an die Antriebe der Walzen (12).

## Beschreibung

Die Erfindung betrifft eine Vorrichtung zur Herstellung und Glättung von Kunststofffolien bzw. Kunststoffplatten gemäß dem Oberbegriff des Anspruchs 1.

Prinzipiell muss man in der Herstellung von Kunststofffolien und Kunststoffplatten zwischen dem Kalanderverfahren und dem Glättverfahren unterscheiden. Bei einer bekannten, nach dem Kalanderverfahren arbeitenden Vorrichtung (US-A-4 372 736) wird ein in seiner Geometrie wenig definierter dicker Schmelzestrang mit einer geringen Breite zu einer breiten Folie mit geringer Dicke regelrecht ausgewalzt. Für dieses Auswalzen werden große Linienspaltkräfte an den Kalandern benötigt. Zum Antrieb der Kalanderwalzen werden folglich auch sehr starke Motoren und zur Übertragung der Drehmomente auch sehr starke Antriebsverbindungen benötigt. Kalander eignen sich hauptsächlich für die Verarbeitung von PVC mit seinem stoffspezifischen Materialverhalten.

Bei der Folien- oder Plattenherstellung mit einem Glättwerk hingegen wird die Folie oder Platte in das Glättwerk bereits in jener Geometrie eingespeist, die man auch am Ende des Prozesses erreichen will. So ist ein Folien- oder Plattenglättprozess unter anderem dadurch gekennzeichnet, dass die Breite der in das Glättwerk eingespeisten Folien- bzw. Plattenbahn durch den Glättprozess nicht verändert wird. Dem Glättwerk muss folglich eine Breitschlitzdüse vorgelagert werden, in der ein zugeführter Schmelzestrom in die Geometrie der Folie oder Platte transformiert wird. Zur Extrusion und beidseitigen Glättung von Kunststofffolien bzw. -platten mit einem Glättwerk sind somit Vorrichtungen gebräuchlich, die einen Extruder zur Extrusion von thermoplastischen Kunststoffen, eine daran angeschlossene Breitschlitzdüse und ein Walzenglättwerk zur Aufnahme der extrudierten Bahn zwischen wenigstens zwei Glättwalzen, die einen Walzenspalt bilden, enthalten. Um eine gleichbleibende Dicke der Kunststoffbahn einhalten zu können, wird stets ein kleiner "Vorrat" der Kunststoffschmelze in Form eines Wulstes vor dem Walzenspalt gehalten und stetig herausgedrängt. Dadurch soll der Walzenspalt ständig exakt gefüllt bleiben. Es hat sich jedoch gezeigt, dass diese Maßnahme keineswegs ausreicht, um eine gleichbleibende Dicke der Kunststoffbahn garantieren zu können. Insbesondere bei der Herstellung von dünnen Kunststofffolien erwies sich diese Maßnahme als weitgehend wirkungslos, so dass die Extrusion und Glättung dünner Kunststofffolien nur bei sorgfältigster Einhaltung gleichbleibender Produktionsbedingungen, vor allem durch die Verwendung einer Breitschlitzdüse mit verstellbarer Austrittslippe, einer sog. "Flexlippe", beherrschbar ist. Die Einstellung und Einhaltung dieser Produktionsbedingungen verlangt aber Personal mit hohem Fachkönnen und großer Erfahrung. Trotzdem treten in der Praxis immer wieder Abweichungen oder Störungen auf, die häufig zu einer Beschädigung der Walzenoberflächen durch extreme Drücke im Glättspalt führen.

Zur Überwindung dieser Nachteile wird in der EP 0 652 995 B1 eine Vorrichtung zur Extrusion von Kunststofffolien vorgeschlagen, enthaltend einen Extruder zur Extrusion von thermoplastischen Kunststoffen, eine daran angeschlossene Breitschlitzdüse und ein Walzenglättwerk, das zur Aufnahme der extrudierten Folienbahn wenigstens zwei einen Walzenspalt bildende Glättwalzen aufweist, wobei wenigstens eine Walze des Glättwerks auf den Seitenschildern des Glättwerks nahezu reibungsfrei verschiebbar gelagert ist und sie senkrecht zur Berührungsebene des Walzenspalts unter Veränderung des Achsabstands zur der anderen Walze federnd angeordnet ist. Dieser Vorrichtung liegt aber nach wie vor die theoretische und in der Praxis nicht ausreichend genau einzuhaltende Annahme zugrunde, dass die Schmelzebahn mit nahezu konstanter Dicke in den Glättspalt einläuft und daher zur vollständigen Glättung der Oberfläche keine hohen Linienkräfte benötigt werden, sondern sich die lichte Weite des Walzenspalts des Glättwerks durch die Dicke der einlaufenden Folienbahn selbsttätig einstellt, indem sich zumindest eine Walze verschiebt. Temporäre Dickenänderungen der Folienbahn aufgrund von Unstetigkeiten im Schmelzestrom werden bewusst in Kauf genommen und angeführt, dass bei Verschwinden der Unstetigkeit im Schmelzestrom die Walze wieder zurückkehrt und auf diese Weise dauernd mit der Kunststoffbahn in Berührung bleibt. Maßnahmen zur aktiven Regelung der Dicke der Kunststofffolie sieht die EP 0 652 995 B1 nicht vor.

Um bei der Herstellung von Folien (oder Platten) in Folienextrusionsvorrichtungen die Foliendicke konstant zu halten bzw. auch während der Produktion regeln zu können, wurden in der Vergangenheit diverse Konzepte vorgestellt.

Zum Beispiel wird in der DE 3531005 C2 ein System beschrieben, bei dem die Foliendicke während der Produktion von einem Dickenmesssystem ermittelt wird und die ermittelten Dickenabweichungen durch die Regelung der Düsenspaltweite ausgeglichen werden. Allerdings kann dieses System auf Dickenschwankungen der Folie die durch Abweichungen der Glättspaltweite, die aufgrund von Belastungsänderungen auftreten, nicht reagieren.

Dieses Problem konnte durch die in der EP 889776 B1 beschriebene Erfindung gelöst werden, indem der Glättspalt zusätzlich durch die Änderung der Wölbung des Walzenmantels reguliert werden kann. Nachteilig ist allerdings, dass dazu die Walzen mit einer komplizierten und kostspieligen Regulierung des Walzenmantels ausgestattet werden müssen.

Der Erfindung liegt nun die Aufgabe zugrunde, eine Vorrichtung zur Herstellung und Glättung von Kunststofffolien und Kunststoffplatten bereitzustellen, in der die Dicke einer Folienbahn oder Plattenbahn aus thermoplastischem Kunststoff im laufenden Betrieb automatisch und exakt reguliert werden kann und die oben erläuterten Nachteile des Standes der Technik überwunden werden.

Diese Aufgabe wird gelöst durch Bereitstellen einer Vorrichtung zur Herstellung und Glättung von Kunststofffolien bzw. Kunststoffplatten mit den Merkmalen des Anspruchs 1. Vorteilhafte Ausgestaltungen der Erfindung sind in den Unteransprüchen und den Ausführungsbeispielen beschrieben.

Die erfindungsgemäße Vorrichtung zur Herstellung und Glättung von Kunststofffolien bzw. Kunststoffplatten umfasst
Kunststoffschmelze-Erzeugungsmittel zur Erzeugung einer Kunststoffschmelze aus einem thermoplastischen Kunststoffmaterial,
eine Breitschlitzdüse mit zwei einander gegenüberliegenden, im Abstand voneinander verstellbaren Düsenlippen, die zwischen einander einen Düsenspalt bilden, wobei der Breitschlitzdüse die Kunststoffschmelze aus den Kunststoffschmelze-Erzeugungsmitteln zuführbar ist,
ein Walzenglättwerk mit zwei Glättwalzen, von denen zumindest eine gekühlt ist, die zwischen einander einen verstellbaren Glättspalt zur Aufnahme des von der Breitschlitzdüse abgegebenen Stroms der Kunststoffschmelze bilden, wobei die Glättwalzen den Strom der Kunststoffschmelze bis zu seiner Verfestigung als Kunststofffolien- oder Kunststoffplattenbahn abkühlen und dabei die Oberflächen glätten, wobei optional den Glättwalzen zumindest eine die Kunststofffolien- oder Kunststoffplattenbahn berührende Kühlwalze nachgeschaltet ist;
zumindest einen Dickenmesser zur Messung der Dicke der Kunststofffolien- oder Kunststoffplattenbahn, der stromabwärts von den Glättwalzen und gegebenenfalls der zumindest einen Kühlwalze angeordnet ist;
eine optionale Abzugsvorrichtung, die vorzugsweise als Abzugswalzenpaar zum Abziehen der Kunststofffolien- oder Kunststoffplattenbahn oder als Wickler ausgeführt ist.

Diese Vorrichtung besitzt einen Regler zur Regelung der Dicke der Kunststofffolien- oder Kunststoffplattenbahn, wobei der Regler Sollwert-Eingänge zur Einstellung der Soll-Dicke der Kunststofffolien- oder Kunststoffplattenbahn und zur Einstellung entweder des Volumenstroms der von den Kunststoffschmelze-Erzeugungsmitteln ausgestoßenen Kunststoffschmelze oder zur Einstellung der Liniengeschwindigkeit aufweist.

Der Regler besitzt weiters Ist-Wert-Eingänge
- zur Erfassung des aktuellen Drehmomentes von zumindest einer Walze, vorzugsweise aller Walzen, und optional des Wicklers;
- zur Erfassung der Drehzahl oder Umfangsgeschwindigkeit von zumindest einer Walze, vorzugsweise aller Walzen; und
- zur Erfassung der vom Dickenmesser gemessenen aktuellen Dicke der Kunststofffolien- oder Kunststoffplattenbahn.

Der Regler weist auch Steuersignalausgänge auf, über die er
- aus den erfassten aktuellen Drehmomenten der Walzen errechnete Soll-Drehzahlsignale oder Soll-Umfangsgeschwindigkeitssignale an die Antriebe der Walzen sendet;
- ein aus der Solldicke und den erfassten aktuellen Drehmomenten der Walzen errechnetes Glättspalt-Soll-Abstandssignal zur Verstellung des Glättspalts ausgibt; und
- entweder - bei vorgegebener Liniengeschwindigkeit - aus der Soll-Dicke und der Ist-Dicke der Kunststofffolien- oder Kunststoffplattenbahn errechnete Soll-Kunststoffschmelze-Volumenstromsignale an die Kunststoffschmelze-Erzeugungsmittel sendet,
   oder - bei vorgegebenem Kunststoffschmelze-Volumenstrom - aus der Soll-Dicke und der Ist-Dicke der Kunststofffolien- oder Kunststoffplattenbahn errechnete Soll-Liniengeschwindigkeitssignale und/oder daraus abgeleitete Soll-Umfangsgeschwindigkeitssignale an die Antriebe der Walzen sendet.

Mit dem Begriff "Folien" werden üblicherweise Kunststoffbahnen mit einer Dicke von bis zu 3 mm bezeichnet. Die Folien werden meist für die spätere Verwendung zu Rollen gewickelt. Mit dem Begriff "Platten" werden Kunststoffbahnen mit einer Dicke zwischen zumeist 1 und 15 mm bezeichnet, welche im Lauf des Produktionsvorgangs in Einzelteile geschnitten und für die weitere Verwendung gestapelt werden. Die Folien oder Platten können einschichtig oder mehrschichtig aus dem gleichen oder unterschiedlichen Kunststoffmaterialien aufgebaut sein. Es ist somit zu verstehen, dass aus einer Kunststoffbahn sowohl Kunststofffolien als auch Kunststoffplatten erzeug werden können. Der Kürze halber wird in der nachfolgenden Beschreibung manchmal mit dem Begriff Kunststofffolie oder Folie auch eine Kunststoffplatte subsummiert.

Die erfindungsgemäße Vorrichtung ist für die Verarbeitung von thermoplastischem Kunststoff konzipiert. Das zu verarbeitende Material umfasst insbesondere thermoplastische Polyester, Polyolefine, Polyvinylchlorid, PET, Virgin-Material und Recycling-Material, z.B. Flakes aus zerkleinerten Kunststoffflaschen, wobei diese Material optional vorbehandelt werden kann, z.B. in einem SSP-Reaktor und auch in Form von Pellets bzw. Granulat zugeführt werden kann. Auch so genanntes "Regrind"-Material, das ist Abfall aus der laufenden Produktion, wie z.B. weggeschnittene Randstreifen, oder Material aus einer früheren Produktion kann der erfindungsgemäßen Vorrichtung wieder zugeführt werden. Soweit in der nachfolgenden Beschreibung die Begriffe Kunststoffschmelze, Schmelze, Kunststoffbahn, Kunststofffolie, Kunststoffplatte, Folie oder Platte verwendet werden, ist damit ein Produkt aus den genannten thermoplastischen Kunststoffmaterialen gemeint.

Der Begriff "Glättung" schließt bei der vorliegenden Erfindung auch die Umwandlung einer unkontrollierten Bahnoberfläche in eine gewünschte Oberflächenstruktur ein.

In einer bevorzugten Ausführungsform der Erfindung, die qualitativ hervorragende Produkte ergibt, adaptiert der Regler bei vorgegebenem Kunststoffschmelze-Volumenstrom das Glättspalt-Soll-Abstandssignal und die Steuersignale für die Liniengeschwindigkeit bzw. die Steuersignale für die Umfangsgeschwindigkeiten oder Drehzahlen der Walzen so, dass das Drehmoment von zumindest einer der Walzen, vorzugsweise aller Walzen, und optional des Wicklers, unter einem Maximaldrehmoment und optional auch oberhalb eines Minimaldrehmoments liegt. Alternativ zu dieser Ausführungsform adaptiert der Regler bei vorgegebener Liniengeschwindigkeit das Steuersignal für den Kunststoffschmelze-Volumenstrom und die Steuersignale für die Umfangsgeschwindigkeiten oder Drehzahlen für jene Walzen, und optional den Wickler, mit Ausnahme jener Walze, deren Umfangsgeschwindigkeit das Maß für die Liniengeschwindigkeit definiert, so, dass das Drehmoment von zumindest einer der Walzen, vorzugsweise aller Walzen, und optional des Wicklers unter einem Maximaldrehmoment und optional auch oberhalb eines Minimaldrehmoments liegt.

Gemäß der Erfindung kann die Düsenspaltverstelleinrichtung entweder manuell oder automatisch betätigbar sein, oder eine manuelle Grundeinstellung und eine automatische Feineinstellung umfassen. In einer weiteren Ausführungsform der Erfindung umfassen die Sollwert-Eingänge des Reglers die Einstellung der Zugkraft des Wicklers, wobei der Regler diese in die Berechnung der Steuersignale mit einbezieht.

Bei der erfindungsgemäßen Vorrichtung umfassen die Kunststoffschmelze-Erzeugungsmittel zumindest einen Extruder, insbesondere einen Einschnecken-, Doppelschnecken- oder Mehrschneckenextruder, und/oder zumindest einen Schmelzereaktor mit Austragspumpe.

Wenn bei der erfindungsgemäßen Vorrichtung zwischen den Kunststoffschmelze-Erzeugungsmitteln und der Breitschlitzdüse ein Filter und/oder eine Schmelzepumpe angeschlossen ist/sind, kann die Schmelze gereinigt werden und es können ein konstanter definierbarer Schmelze-Volumenstrom sowie eine Stabilisierung und Erhöhung des Schmelzedrucks erzielt werden.

Zur Erhöhung der Genauigkeit der Einstellung des Düsenspalts ist in einer Ausführungsform der Erfindung die Breitschlitzdüse über ihre Breite in mehrere Zonen unterteilt ist, in denen die jeweiligen Abschnitte der Düsenlippen einzeln im Abstand voneinander verstellbar sind.

Man erreicht eine sehr genaue Einstellbarkeit, wenn zur Abstandsverstellung der Düsenlippen oder Düsenlippen-Abschnitte über die Breite der Breitschlitzdüse verteilte temperierbare Dehnbolzen angeordnet sind, deren Länge mit ihrer Temperatur variiert, wobei die Dehnbolzen einerseits an einer Düsenlippe und andererseits an einem feststehenden Maschinenteil angebracht sind.

In einer alternativen Ausführungsform, die ebenfalls sehr genaue Einstellbarkeit bietet, sind zur Abstandsverstellung der Düsenlippen oder Düsenlippen-Abschnitte über die Breite der Breitschlitzdüse verteilte, motorisch verstellbare Gewindebolzen vorgesehen, wobei entweder jedem Gewindebolzen ein angesteuerter Motor zugeordnet ist, oder ein verfahrbarer Motor vorgesehen ist, der automatisch von Gewindebolzen zu Gewindebolzen bewegbar ist und diese nacheinander verstellt.

Die Einstellbarkeit wird weiter verbessert, wenn eine Glättwalze des den Glättspalt bildenden Glättwalzenpaares auf einem beweglichen Hebel gelagert ist, der mittels eines Aktuators um einen Drehpunkt schwenkbar ist. Es ist ein großes Drehmoment auf den Drehpunkt des Hebels aufbringbar, wenn der Aktuator, der den Hebel bewegt, als Pneumatik- oder Hydraulikzylinder oder als Rotationsantrieb ausgeführt ist. Dieses Drehmoment ist größer als das vom Glättspalt resultierende Gegendrehmoment.

In einer alternativen Ausführungsform ist eine Glättwalze des den Glättspalt bildenden Glättwalzenpaares linear verschiebbar gelagert. Die Bildung eines definierten Glättspalts wird erleichtert, wenn der Schwenkbereich des Hebels bzw. die lineare Verschiebbarkeit der Glättwalze durch einen verstellbaren Anschlag begrenzt ist, wobei vorzugsweise der verstellbare Anschlag ein drehbar gelagerter Volumskörper ist, dessen Dicke, das ist der Abstand der Außenfläche des Volumskörpers zur Drehachse, abhängig vom Verdrehwinkel des Volumskörpers ist. Der Volumskörper kann als Exzenter mit kreisrunder, elliptischer oder einer komplexeren Umfangskurve ausgestaltet sein.

Aus Sicherheitsgründen ist in einer Ausführungsform der Erfindung vorgesehen, den Schwenkbereich des Hebels bzw. die lineare Verschiebbarkeit der Glättwalze durch einen verstellbaren Anschlag zu begrenzen. Der verstellbare Anschlag ist als Spindelantrieb ausgeführt.

Der Dickenmesser kann als stationärer Dickenmesser ausgebildet sein, der die Dicke der Kunststofffolien- oder Kunststoffplattenbahn über deren gesamte Breite oder nur in einem Teilbereich misst. Zur Erfassung eines Querdickenprofils der Folie ist der Dickenmesser entweder als stationärer Dickenmesser ausgebildet, der in mehrere Messzonen unterteilt ist und die Dicke der Kunststofffolien- oder Kunststoffplattenbahn abschnittsweise über deren gesamte Breite misst, oder der Dickenmesser ist als die Breite der Folie traversierender Dickenmesser ausgebildet. Der Dickenmesser kann kapazitive oder induktive Sensoren, optische Sensoren, Sensoren, die den Abstand der Folienoberfläche zu einer Umlenkwalze ermitteln, oder Röntgen-Transmissionssensoren aufweisen.

Die Erfindung wird nun anhand von nicht einschränkenden Ausführungsformen unter Bezugnahme auf die Zeichnungen beispielhaft näher beschrieben.
Fig. 1 zeigt ein Prozessschema einer erfindungsgemäßen Produktionsvorrichtung zur Herstellung und Glättung von Folien und/oder Platten aus thermoplastischem Kunststoff in Seitenansicht;
Fig. 2 zeigt den Aufbau einer mit der erfindungsgemäßen Produktionsvorrichtung erzeugbaren Mehrschichtfolie aus thermoplastischen Kunststoffen in der Materialabfolge A-B-A;
Fig. 3 zeigt einen vorteilhaften Aufbau eines Glättwerks der erfindungsgemäßen Produktionsvorrichtung;
Fig. 4 zeigt ein Schaubild eines in der erfindungsgemäßen Produktionsvorrichtung verwendeten Reglers mit den Regelparametern bei vorgegebenem Materialausstoß;
Fig. 5 zeigt ein Schaubild eines alternativen, in der erfindungsgemäßen Produktionsvorrichtung verwendeten Reglers mit den Regelparametern bei vorgegebener Liniengeschwindigkeit;
Fig. 6 zeigt ein Schema einer Querprofilregelung des Düsenspalts einer in der erfindungsgemäßen Produktionsvorrichtung verwendeten Breitschlitzdüse in Draufsicht;
Fig. 7 zeigt ein Schaubild der Regelparameter der Querprofilregelung von Fig. 6; und
Fig. 8 zeigt den verstellbaren Düsenspalt.

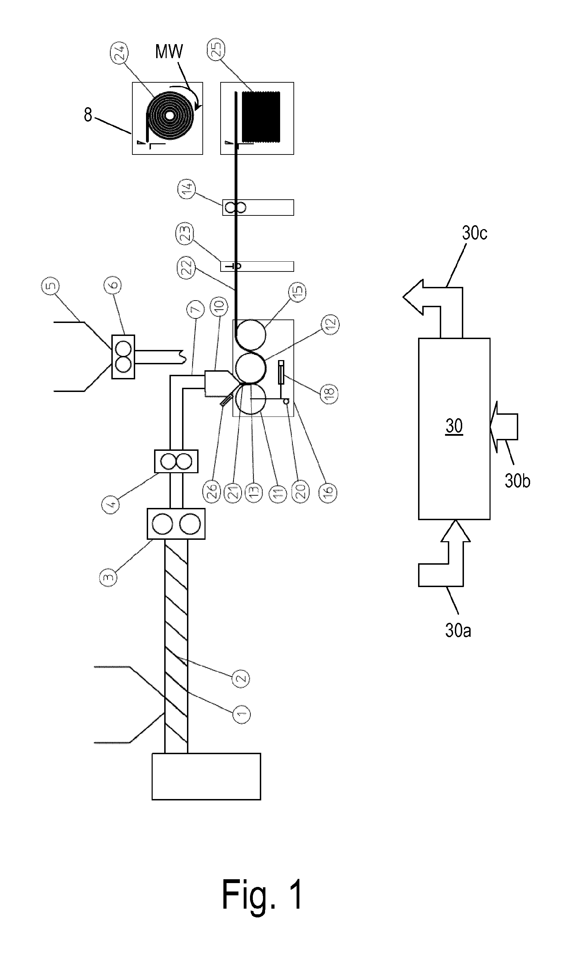

Eine Ausführungsform einer erfindungsgemäßen Vorrichtung zur Herstellung und Glättung von Kunststofffolien und/oder Kunststoffplatten aus thermoplastischen Kunststoffen ist schematisch in Fig. 1 dargestellt und wird nun im Detail beschrieben. Zur Vermeidung von Wortwiederholungen wird nachfolgend zumeist auf Kunststofffolien Bezug genommen. Es versteht sich aber, dass die Produktionsvorrichtung gleichermaßen für Kunststoffplatten konzipiert ist.

Die Vorrichtung zur Herstellung und Glättung von Kunststofffolien und/oder Kunststoffplatten weist Kunststoffschmelze-Erzeugungsmittel in Form eines Extruders (1) auf, dem das thermoplastische Kunststoff-Ausgangsmaterial zugeführt wird. Bei dem Extruder (1) kann es sich um einen Einschnecken-, Doppelschnecken- oder Mehrschneckenextruder handeln. Das Kunststoffmaterial wird in dem Extruder (1) erwärmt und mittels einer oder mehrerer Schnecke(n) (2) in Richtung des Extruderausgangs gefördert, dabei verdichtet, aufgeschmolzen, homogenisiert und optional entgast. Nach dem Extruderausgang folgt ein optionaler Filter (3) zur Reinigung der Schmelze, sowie optional eine Schmelzepumpe (4), um einen konstanten, definierbaren Kunststoffschmelze-Volumenstrom zu erhalten. Weiters wird durch die Schmelzepumpe (4) der Schmelzedruck stabilisiert und erhöht.

Alternativ oder zusätzlich zum Extruder (1) kann der für die Kunststofffolienproduktion benötigte Kunststoffschmelzestrom in einem Schmelzereaktor (5) erzeugt werden und mittels einer Austragspumpe (6) entnommen werden.

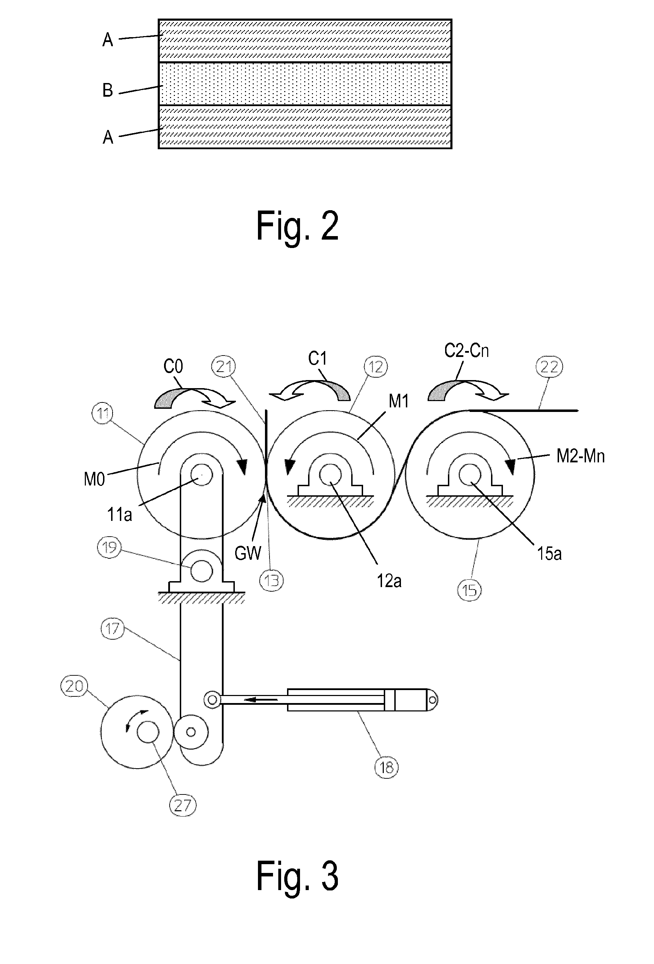

Wenn mehrere Extruder (1) und/oder Schmelzereaktoren (5), insbesondere zur Herstellung von mehrschichtigen Kunststofffolien bzw. Kunststoffplatten (siehe Fig. 2), vorgesehen sind, folgt ein Feedblock (7), welcher die zugeführten Schmelzeströme zu einem einzigen austretenden Schmelzestrom vereint, wobei die Aufteilung anhand eines vorgegebenen Verhältnisses erfolgt, z.B.: A/B/A = 10/80/10, wenn gilt: A = Ausstoß Co-Extruder, B = Ausstoß Haupt-Extruder und das Verhältnis von A/B = 20/80).

Die so erzeugte Kunststoffschmelze wird in eine Breitschlitzdüse (10) geleitet. Der aus der Breitschlitzdüse (10) austretende Kunststoffstrom (21) ähnelt im Querschnitt schon der fertigen Folie/Platte. Der austretende Volumenstrom ist über die Dosierung, den Extruder (1) bzw. die Schmelzepumpe (4) regelbar, wobei der Sollwert von der nachfolgend beschriebenen Dickenregelung vorgegeben wird.

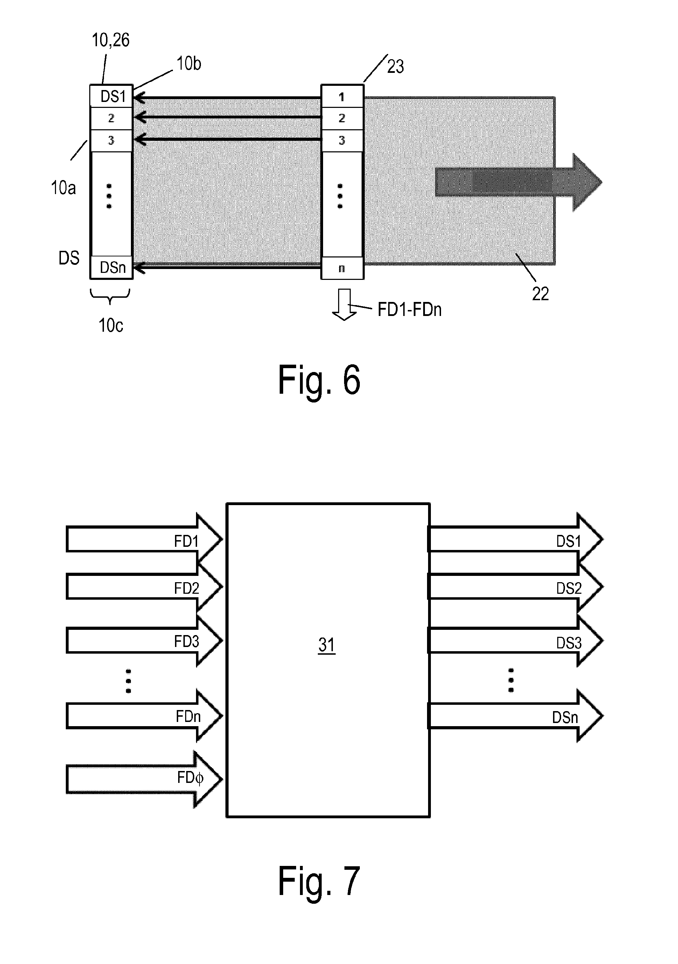

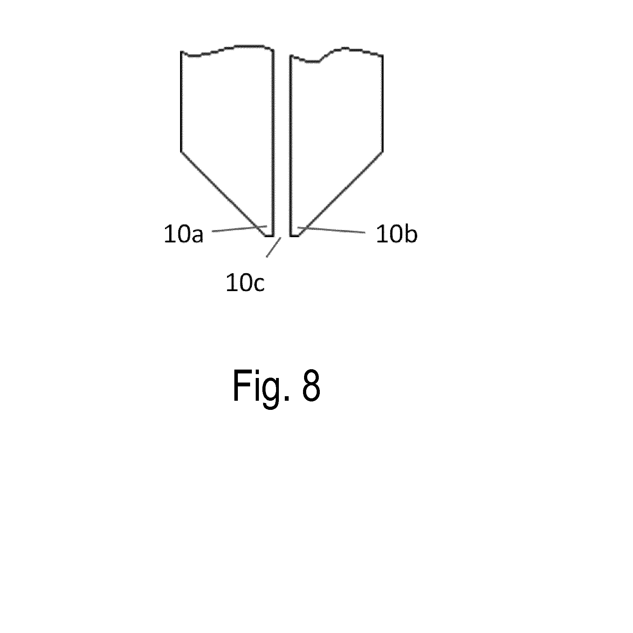

Bei der Düse (10) kann der Abstand der Düsenlippen (10a, 10b) voneinander eingestellt werden (= Düsenspalt 10c), siehe Fig. 6 und insbesondere Fig. 8. Dies kann mittels verschiedener Konzepte gelöst werden. Ein Konzept sieht eine manuelle Einstellung des Düsenspalts 10c vor. Ein weiteres Konzept sieht eine manuelle Grundeinstellung des Düsenspalts 10c und eine automatische Feineinstellung vor, woraus sich insgesamt ein begrenzter automatisch verstellbarer Bereich ergibt. Ein drittes Konzept sieht eine automatische Verstellung des Düsenspalts 10c über den gesamten Bereich vor, wodurch keine manuelle (Grund-)Einstellung notwendig ist, sondern die gesamte Düsenspaltverstellung automatisch erfolgt. Bei allen Konzepten kann der Düsenspalt (10c) entweder über die gesamte Breite gleich verstellt werden, oder die Düsenbreite wird in mehreren Zonen (1 bis n) unterteilt, in denen die jeweiligen Abschnitte der Düsenlippen (10a, 10b) einzeln verstellbar sind. In einer bevorzugten Ausgestaltung sind über die ganze Düsenbreite in regelmäßigen Abständen beheizte Dehnbolzen (26) angebracht, deren Länge mit der in sie eingebrachten Heizleistung variiert. Dabei sind die Dehnbolzen (26) einerseits an einer Düsenlippe und andererseits an einem feststehenden Maschinenteil angebracht, so dass in Abhängigkeit von der temperaturabhängigen Länge der Dehnbolzen (26) der Düsenspalt im jeweiligen Bereich größer oder kleiner wird. Alternativ können statt der Dehnbolzen auch Gewindebolzen angebracht sein und mittels entsprechend angesteuerter Motoren der Düsenspalt verstellt werden. Denkbar ist, dass man pro Gewindebolzen einen Motor hat, oder nur einen einzigen, der automatisch von Bolzen zu Bolzen bewegt wird und diese nach einander verstellt.

Die aus der Düse (10) austretende Schmelze (21) wird zwischen zwei gegenläufig drehenden Glättwalzen (11,12) geglättet, von denen zumindest eine gekühlt ist, vorzugsweise jene Glättwalze (12), die von der Folienbahn (22) teilweise umschlungen wird. Am bevorzugtesten sind jedoch beide Glättwalzen (11,12) gekühlt. Die Glättwalzen (11,12) haben einen Abstand (13) voneinander, den sogenannten Glättspalt, welcher durch die Dickenregelung vorgegeben wird und während des laufenden Betriebs automatisch geändert werden kann. Stromabwärts von den Glättwalzen (11,12) ist optional zumindest eine Kühlwalze (15) angeordnet, die von der geglätteten Folienbahn (22) teilweise umschlungen wird. Je nach Anforderung kann die zumindest eine optional Kühlwalze (15) direkt am Glättwerk aufgebaut sein, wie z.B. die Walze 15 in den Figuren 1 und 3, oder als separate Nachkühleinheit stromabwärts vom Glättwerk vorgesehen sein. Die Kühlwalze (15) und die Glättwalzen (11,12) des Glättwerks (16) werden mit einem Temperiermedium (z.B. Wasser mit einem bestimmten Glukoseanteil, z.B. Kühlwasser aus einem offenen oder geschlossenen Kühlkreislauf) durchflossen und können so auf eine vorgegebene Temperatur geregelt werden. Jede Glättwalze und optional auch Kühlwalze hat einen eigenen geregelten Antrieb (11a, 12a, 15a), vorzugsweise ausgeführt wie in der EP-Patentanmeldung Nr. 13167232.1 beschrieben. Andere Ausführungen von geregelten Antrieben, welche die angegebenen Anforderungen erfüllen und dem Fachmann bekannt sind, sind auch verwendbar. Als Beispiele können Asynchronmotoren oder Synchronmotoren mit oder ohne Rückmeldung angeführt werden. Jedem geregelten Walzenantrieb kann die Drehzahl oder Umfangsgeschwindigkeit und das maximal zulässige Drehmoment vorgegeben werden. Als Istwerte werden die aktuelle Drehzahl oder Umfangsgeschwindigkeit und das aktuelle Drehmoment der Walzenantriebe erfasst. Das Glättwerk (16) kann bei Bedarf zusätzlich zu den beiden Glättwalzen (11,12), mehrere Umlenkwalzen und eine Abzugsvorrichtung in Form eines als "Abzugsduo" bezeichnetes Abzugswalzenpaar (14) umfassen, zwischen dem die gekühlte Folienbahn (22) unter Reibungsschluss abgezogen wird. Zur Erhöhung der Kühlleistung können weitere Kühlwalzen (15) mit oder ohne eigenen Antrieb, welche von der Kunststoff-Folienbahn (22) teilweise umschlungen werden, vorgesehen werden. Angetriebene Kühlwalzen (15) können beispielsweise mit einem Servoantrieb oder mit Asynchronmotoren realisiert werden.

Das Abzugswalzenpaar (14) dient dazu, die Folienbahn (22) vom Glättwerk (16) über die Kühlwalze(n) auf Zugspannung zu halten und umfasst zumeist zwei gummierte Metallwalzen, wobei auch eine Variante mit einer gummierten und einer nicht gummierten Walze möglich ist. Zumindest eine gummierte Walze ist von einem geregelten Walzenantrieb angetrieben. Der geregelte Antrieb des Abzugswalzenpaars (14) wird mit einem Servoantrieb realisiert, dem Geschwindigkeit und Maximaldrehmoment vorgegeben werden und als Istwerte die aktuelle Drehzahl oder Umfangsgeschwindigkeit und das aktuelle Drehmoment ausgelesen werden können. Es kann auch ein Asynchronmotor oder Synchronmotor mit oder ohne Drehzahlgeber als Antrieb für das Abzugswalzenpaar verwendet werden.

Die Verstellbarkeit des Glättspalts (13) kann beispielsweise - wie in Fig. 3 gezeigt - realisiert werden, indem eine Glättwalze (11) des den Glättspalt (13) bildenden Glättwalzenpaares (11,12), die bevorzugt jene Glättwalze ist, die nicht von der Folienbahn (22) umschlungen wird, auf einem beweglichen Hebel (17) gelagert ist. Dieser Hebel (17) kann mittels eines Aktuators (18) um einen Drehpunkt (19) geschwenkt werden. Der Schwenkbereich des Hebels (17) kann durch einen verstellbaren Anschlag (20,27) begrenzt werden, wodurch sich ein definierter Glättspalt (13) bildet. Der verstellbare Anschlag (20,27) kann zum Beispiel ein drehbar gelagerter Volumskörper (20) sein, dessen Dicke - damit ist der Abstand der Außenfläche zur Drehachse (27) gemeint - abhängig vom Verdrehwinkel ist. Als einfachste Ausführung wird hier der Exzenter (20) mit kreisrundem Umfang und aus dem Zentrum versetzter Drehachse genannt. Es können aber auch elliptische Umfänge und komplexere Umfangskurven vorgesehen werden. Der Aktuator (18), der den Hebel (17) bewegt, ist bevorzugt als Pneumatik- oder Hydraulikzylinder ausgeführt. Es können aber auch alternative Aktuatoren vorgesehen sein, die ein entsprechend großes Drehmoment auf den Drehpunkt (19) des Hebels (17)aufbringen, wie z.B. Rotationsantriebe. Je nach Stellung des Exzenters (20) wird so eine bestimmte Weite des Glättspalts (13) eingestellt. Der Exzenter (20) wird mit einem Servoantrieb positioniert, wobei die in der Steuerungseinrichtung hinterlegten Umrechnungstabellen bzw. entsprechende Umrechnungsformeln zwischen Glättspalt (13) und Exzenterposition berücksichtigt werden. Eine Grundvoraussetzung bei diesem Aufbau ist, dass das von der Kraft, erzeugt durch die Kunststoffschmelze (21) und dem sich vor dem Glättspalt aufbauenden Kunststoffschmelzewulst, im Glättspalt (13) resultierende Drehmoment um den Drehpunkt (19) kleiner ist als das durch den Aktuator (18) erzeugte Gegendrehmoment, um sicherzustellen, dass der Exzenter (20) einen Kontakt zum Hebel (17) hat. Als Alternative zum Exzenter (20) können auch andere Ansätze gewählt werden, um die Position des Anschlages zu verändern, beispielsweise beheizte Dehnbolzen. Diese Vorrichtung kann beidseitig vorhanden sein, um den Glättspalt (13) jeder Seite unabhängig zu verstellen. Es ist aber auch denkbar, diesen Mechanismus simpel auszuführen und beide Seiten gemeinsam zu verstellen.

In alternativen Ausführungsformen kann der Glättspalt (13) mittels anderer mechanischer Konstruktionen positioniert werden, z.B.mittels horizontaler Spindel mit kleiner Steigung, die mittels Servoantrieb positioniert wird; oder mit einem keilförmigen Anschlag, der servomotorgesteuert in einer Translationsbewegung verschoben wird. Wichtig ist, dass der Glättspalt (13) unabhängig von der Kraft, erzeugt durch die Kunststoffschmelze (21) bzw. dem resultierenden Schmelzewulst, im Glättspalt (13) gemäß dem von der Regelung vorgegebenen Wert konstant bleibt.

Wenn der Ausstoß von Kunststoffschmelze aus den Kunststoffschmelze-Erzeugungsmitteln (1, 5), die Weite des Düsenspalts, die Weite des Glättspalt (13) und die Walzengeschwindigkeiten nicht passend gewählt werden, resultiert daraus eine schlechtere Qualität der Folie (22) bzw. Folienoberfläche, da sich vor dem Glättspalt (13) zumindest stellenweise zu viel oder zu wenig Material sammelt.

Sammelt sich zu viel Material an, so bildet sich dadurch ein sogenannter "Knet", das ist ein Kunststoffschmelzewulst, der in weiterer Folge zu einem "Knetübersprung" führt, wenn nämlich dieser Kunststoffschmelzewulst durch den Glättspalt hindurch gepresst wird. Diesen Knetübersprung sieht man in der fertigen Folie (22). Eine weitere Folge davon ist, dass die Drehmomente der Glättwalzenantriebe steigen. Im schlimmsten Fall überschreitet das resultierende Drehmoment das Maximaldrehmoment des Antriebs, wodurch die Glättwalze blockiert und die gesamte Produktion gestoppt werden muss.

Wenn (stellenweise) zu wenig Material in den Glättspalt (13) gelangt, hat die Kunststoffschmelze in diesem Bereich keinen Kontakt mit beiden Kühlwalzen (11,12). Das führt dazu, dass die Folie (22) in diesem Bereich nicht entsprechend gekühlt und geglättet wird, was man in der fertigen Folie sieht. Es kann soweit kommen, dass die Folie (22) in diesem Bereich durchhängt und beim weiteren Durchlaufen der Folienbahn, z.B. im Bereich des Abzugsduos oder bei anderen Engstellen hängen bleibt und reißt. Es kann auch passieren, dass die Folie (22) durch die schlechte Kühlung im Bereich der Dünnstelle spröde wird und als Folge im weiteren Durchlaufen durch die Anlage bricht. Ebenso ist es möglich, dass die Folie (22) durch unzureichende Schmelzezufuhr Löcher aufweist und dadurch zu Produktionsausschuss führt.

Nach dem Glättwerk (16) folgen diverse Einrichtungen zum Prüfen der Folienqualität, nämlich ein Dickenmesser (23), optional auch Farbmesseinrichtungen, ein Kamerasystem, etc. Diese können je nach Anforderung stationär sein und nur einen Teil der Breite der Folie überwachen, oder die gesamte Breite der Folie überwachen oder die Breite der Folie traversieren und so die gesamte Breite der Folie überwachen. Je nach Anforderung können noch weitere Stationen folgen, die zum Beispiel Silikon auftragen oder eine weitere Folie auf die erzeugte Kunststofffolie oder -platte auflaminieren.

Am Ende der Produktionsvorrichtung werden üblicherweise noch die Ränder der Kunststofffolie oder -platten abgeschnitten und die Folie in einem Wickler (8) zu Rollen (24) aufgewickelt. Bei der Produktion von Platten (25) werden diese geschnitten und gestapelt. Der Wickler (8) kann ergänzend oder alternativ zu dem Abzugswalzenpaar (14) als Abzugsvorrichtung wirken.
Die Dicke und Qualität der Kunststofffolien und -platten hängen maßgeblich von folgenden Faktoren ab, bzw. wie diese aufeinander abgestimmt sind:
- Schmelzestrom, das ist der Volumenstrom an Kunststoffschmelze, der die Breitschlitzdüse verlässt;
- Weite des Düsenspalts, eingestellt mittels Gewindebolzen, Dehnbolzen, etc.
- Weite des Glättspalts
- Walzengeschwindigkeiten (und die daraus resultierende Foliengeschwindigkeiten)
- Grenzviskosität (iV-Wert) des Schmelzestroms

Herkömmlicherweise werden diese Parameter vom Operator der Produktionsanlage eingestellt, angepasst und verändert, um eine Folie mit geforderter Qualität zu erhalten. Das Ergebnis hing daher bisher maßgeblich von der Erfahrung des Operators ab.

In Fig. 3 ist mit dem Bezugszeichen C0 die Umfangsgeschwindigkeit der Glättwalze (11), welche nicht von der Kunststofffolienbahn (22) umschlungen wird, bezeichnet. Das Bezugszeichen C1 bezeichnet die Umfangsgeschwindigkeit der Glättwalze (12), welche teilweise von der Kunststofffolienbahn (22) umschlungen wird. Die Bezugszeichen C2 bis Cn bezeichnen die Umfangsgeschwindigkeiten optionaler Kühlwalzen (15), welche insbesondere bei Herstellung von dickeren Folien/Platten zum weiteren Abkühlen der Kunststofffolienbahn notwendig sein können.

Die Umfangsgeschwindigkeit C1 der von der Kunststofffolienbahn umschlungenen Glättwalze (12) wird auch als "Liniengeschwindigkeit" bezeichnet, da sie die Referenzgeschwindigkeit darstellt, von der alle Drehzahlen der gesamten Kunststofffolien bzw. Kunststoffplatten-Herstellungsvorrichtung (=Linie) abhängig sind (entweder als Offset oder prozentuell).

Mit dem Begriff "Bahngeschwindigkeit" wird die resultierende Geschwindigkeit der erkalteten gesamten Kunststofffolienbahn bzw. Kunststoffplattenbahn bezeichnet. Die Bahngeschwindigkeit ist aufgrund von Schlupf, Schrumpfen der Kunststoffbahn(während des Abkühlvorganges) und anderen Einflüssen nicht exakt bestimmbar und wird daher für die erfindungsgemäße Regelung nicht verwendet.

Ziel dieser Erfindung ist es, eine Regelung zu realisieren, die die Folien- bzw. Plattenqualität vollautomatisch regelt und dadurch den Einfluss der Erfahrung und des Geschicks des Operators auf die Qualität der hergestellten Produkte verringert.

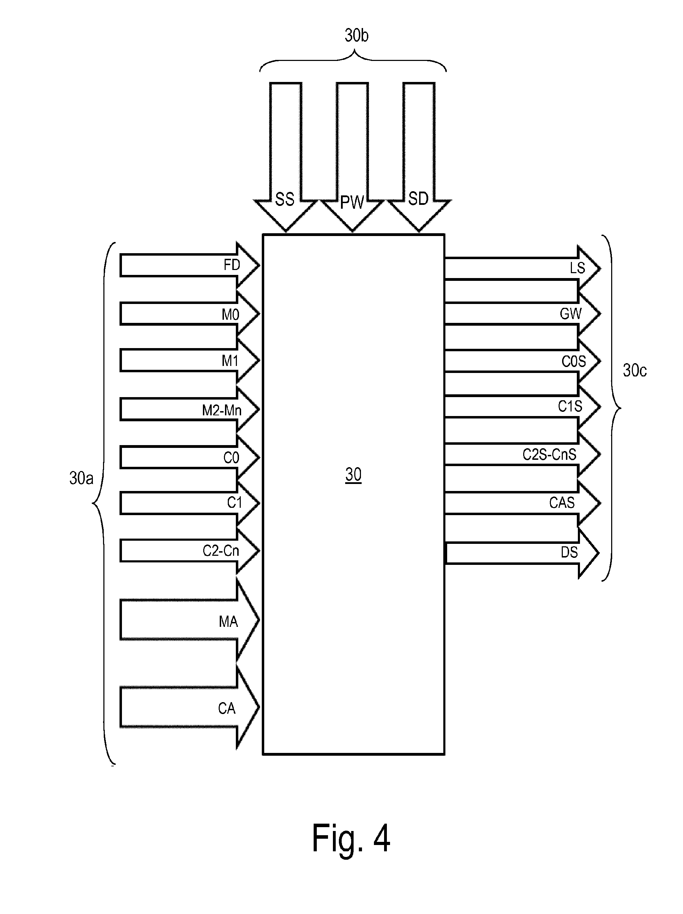

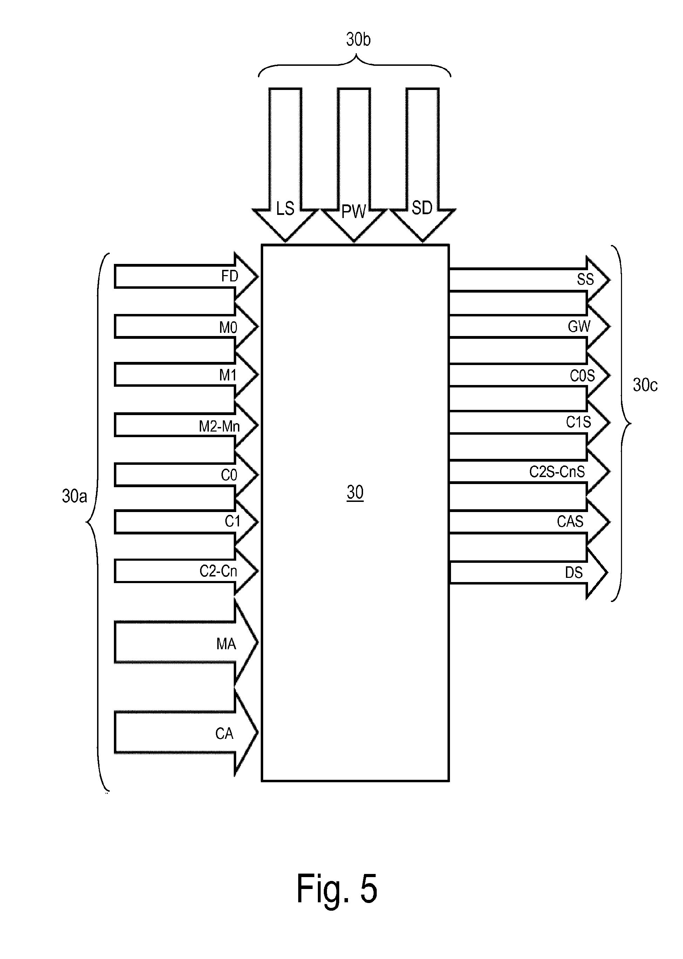

Dafür sieht die Erfindung, wie in den Figuren 4 und 5 schematisch dargestellt, einen Regler (30) zur Regelung der Dicke der Kunststofffolien- oder Kunststoffplattenbahn vor, der Sollwert-Eingänge (30b), Ist-Wert-Eingänge (30a) und Steuersignalausgänge (30c) aufweist.

Die Sollwert-Eingänge (30b) dienen zur Einstellung der Soll-Dicke (SD) der Kunststofffolien- oder Kunststoffplattenbahn (22) und zur Einstellung entweder des Volumenstroms (SS) der von den Kunststoffschmelze-Erzeugungsmitteln gelieferten Kunststoffschmelze (siehe Fig. 4) oder zur Einstellung der Liniengeschwindigkeit (LS) (siehe Fig. 5) durch einen Operator. Optional kann auch ein Sollwert-Eingang der Einstellung der Zugkraft (PW) des Wicklers (8) dienen

Die Ist-Wert-Eingänge (30a) dienen zur Erfassung der Drehmomente (M0, M1, M2-Mn, MA, MW) der Glättwalzen (11,12) der optionalen Kühlwalzen (15) und des Abzugswalzenpaars (14), und optional des Wicklers (8);weiters zur Erfassung der Drehzahlen oder Umfangsgeschwindigkeiten (C0, C1, C2-Cn, CA) der Glättwalzen (11,12), der optionalen Kühlwalzen (15) und des Abzugswalzenpaars (14), und zur Erfassung der vom Dickenmesser (23) gemessenen aktuellen mittleren Dicke (FD) der Kunststofffolien- oder Kunststoffplattenbahn (22). Es sei erwähnt, dass die Umfangsgeschwindigkeit (C1) der Glättwalze (12) die Liniengeschwindigkeit (LS) definiert.

Über die Steuersignalausgänge (30c) sendet der Regler (30) Soll-Drehzahlsignale oder Soll-Umfangsgeschwindigkeitssignale an die Antriebe (11a, 12a, 15a) der Glättwalzen (11,12), der optionalen Kühlwalzen (15) und des Abzugswalzenpaars (14), weiters Glättspalt-Soll-Abstandssignale (GW) zur Verstellung des Glättspalts (13) an den Aktuator (18). Wenn die Liniengeschwindigkeit (LS) vorgegeben ist (Fig. 5), sendet der Regler (13) Soll-Kunststoffschmelze-Volumenstromsignale (SS) an die Kunststoffschmelze-Erzeugungsmittel, die ihren Schmelzeausstoß entsprechend regulieren. Wenn der Kunststoffschmelze-Volumenstrom (SS) vorgegeben ist (Fig. 4), generiert der Regler (30) Soll-Liniengeschwindigkeitssignale (LS) und davon abgeleitete Soll-Umfangsgeschwindigkeitssignale (C0S, C1S, C2S-CnS, CAS) oder Soll-Drehzahlsignale an die geregelten Antriebe (11a, 12a, 15a) der Glättwalzen (11,12), der optionalen Kühlwalzen und des Abzugswalzenpaars (14). Es sei erwähnt, dass das Soll-Signal der Liniengeschwindigkeit (LS) gleich dem Soll-Umfangsgeschwindigkeitssignal (C1) der Glättwalze (12) ist, da ja die Umfangsgeschwindigkeit (C1) der Glättwalze (12) die Liniengeschwindigkeit (LS) definiert, weshalb es ausreichend ist, nur eines der beiden Signale zu senden.

Die genannten Steuersignale berechnet der Regler (30), indem er bei vorgegebenem Kunststoffschmelze-Volumenstrom (SS) periodisch die aktuelle Dicke der Kunststofffolien- oder Kunststoffplattenbahn mit der Soll-Dicke vergleicht, das Drehmoment von zumindest einer der Walzen (11, 12, 14, 15), vorzugsweise aller Walzen, darauf überprüft, ob es unterhalb einem Maximaldrehmoment und optional auch oberhalb eines Minimaldrehmoments liegt, und die Ist-Umfangsgeschwindigkeit (C0, C1, C2-Cn, CA) oder Ist-Drehzahlen von zumindest einer Walze, vorzugsweise aller Walzen, mit der Soll-Umfangsgeschwindigkeit oder der Soll-Drehzahl vergleicht und daraus die Steuersignale für die Liniengeschwindigkeit (LS) und davon abgeleitet die Steuersignale für die Umfangsgeschwindigkeiten oder Drehzahlen der Walzen generiert, sowie das Steuersignal für den Glättspalt generiert. Optional kann auch die Kraft, mit der der Wickler (8) die Folie zieht, in die Berechnung des Reglers mit einbezogen werden.

Wenn die Liniengeschwindigkeit (LS) vorgegeben ist, berechnet der Regler (30) die Steuersignale, indem er periodisch die aktuelle Dicke der Kunststofffolien- oder Kunststoffplattenbahn mit der Soll-Dicke vergleicht, das Drehmoment von zumindest einer der Walzen (11, 12, 14, 15), vorzugsweise aller Walzen, darauf überprüft, ob es unterhalb einem Maximaldrehmoment und optional auch oberhalb eines Minimaldrehmoments liegt, und die Ist-Umfangsgeschwindigkeit (C0, C1, C2-Cn, CA) oder Ist-Drehzahlen von zumindest einer Walze, vorzugsweise aller Walzen, mit der Soll-Umfangsgeschwindigkeit oder der Soll-Drehzahl vergleicht. Aus diesen Vergleichen generiert der Regler (30) das Steuersignal für den Kunststoffschmelze-Volumenstrom (SS) als Sollwert für die Regelung des Ausstoßes an Kunststoffschmelze der Kunststoffschmelze-Erzeugungsmittel (1, 5), weiters die Steuersignale für die Umfangsgeschwindigkeiten oder Drehzahlen der Walzen, sowie das Steuersignal für den Glättspalt. Optional kann auch die Kraft, mit der der Wickler (8) die Folie zieht, in die Berechnung des Reglers mit einbezogen werden.

In Fig. 6 ist ein Schema einer Querprofilregelung des Düsenspalts einer automatischen Breitschlitzdüse dargestellt. Fig. 7 zeigt ein Schaubild der Regelparameter dieser Querprofilregelung von Fig. 6. Der Dickenmesser (23) liefert für die Zonen (1-n) ein Dickenprofil (FD1-FDn) der Folienbahn (22) quer zur Folienbahnrichtung. Je nach Anzahl der Datenpunkte über die Breite der Folienbahn werden vor der Weiterverarbeitung die Rohwerte noch in der Art gemittelt, dass man so viele Mittelwerte wie Regelzonen der Düsenspaltverstelleinrichtung (26) erhält. Ein Regler (31), der ein Teil des Reglers (30) sein kann, vergleicht diese mit einer mittleren Dicke der gesamten Folienbahn (22) und gibt entsprechende Sollwerte (DS, DS1-DSn) an die Düsenspaltverstelleinrichtung (26) aus. Zur Verstellung des Düsenspalts sind verschiedene Konzepte vorgesehen, z.B. mittels beheizter Dehnbolzen, Exzenter, angetriebener Gewindebolzen, etc., für jede Zone.

Zur Messung der Foliendicke (FD) können verschiedenste Sensoren zum Einsatz kommen, wie Kapazitiv-Induktivsensoren, optische Sensoren, oder andere Messmethoden/-sensoren, die den Abstand der Folienoberfläche zu einer Umlenkwalze ermitteln. Weiters können auch z.B. Röntgen-Transmissionssensoren zur Anwendung kommen, die direkt die Foliendicke messen. Um entsprechend viele Messpunkte zu erhalten, kann der Dickenmesser (23) bzw. dessen Sensor auf einer Führung quer zur Folienbahnrichtung bewegt, das heißt traversiert, werden und so ein Dickenprofil aufgenommen werden. Man kann aber auch mehrere stationäre, über die Bahnbreite angeordnete Dickenmesser (23) bzw. Sensoren verwenden.

## Patentansprüche

1. Vorrichtung zur Herstellung und Glättung von Kunststofffolien bzw. Kunststoffplatten, umfassend
Kunststoffschmelze-Erzeugungsmittel (1, 5) zur Erzeugung einer Kunststoffschmelze (21) aus einem thermoplastischen Kunststoffmaterial,
eine Breitschlitzdüse (10) mit zwei einander gegenüberliegenden, im Abstand voneinander verstellbaren Düsenlippen (10a, 10b), die zwischen einander einen Düsenspalt (10c) bilden, wobei der Breitschlitzdüse die Kunststoffschmelze aus den Kunststoffschmelze-Erzeugungsmitteln zuführbar ist,
ein Walzenglättwerk (16) mit zwei Glättwalzen (11, 12), von denen zumindest eine gekühlt ist, die zwischen einander einen verstellbaren Glättspalt (13) zur Aufnahme des von der Breitschlitzdüse abgegebenen Stroms der Kunststoffschmelze (21) bilden, wobei die Glättwalzen (11, 12) den Strom der Kunststoffschmelze (21) bis zu seiner Verfestigung als Kunststofffolien- oder Kunststoffplattenbahn (22) abkühlen und dabei die Oberflächen glätten, wobei optional den Glättwalzen (11, 12) zumindest eine die Kunststofffolien- oder Kunststoffplattenbahn (22) berührende Kühlwalze (15) nachgeschaltet ist;
zumindest einen Dickenmesser (23) zur Messung der Dicke der Kunststofffolien- oder Kunststoffplattenbahn (22), der stromabwärts von den Glättwalzen (11, 12) und gegebenenfalls der zumindest einen Kühlwalze (15) angeordnet ist;
eine optionale Abzugsvorrichtung, die vorzugsweise als Abzugswalzenpaar (14) zum Abziehen der Kunststofffolien- oder Kunststoffplattenbahn (22) oder als Wickler (8) ausgeführt ist; **gekennzeichnet durch**
einen Regler (30) zur Regelung der Dicke der Kunststofffolien- oder Kunststoffplattenbahn (22), wobei der Regler (30) Sollwert-Eingänge (30b)
- zur Einstellung der Soll-Dicke (SD) der Kunststofffolien- oder Kunststoffplattenbahn (22); und
- zur Einstellung entweder des Volumenstroms (SS) der von den Kunststoffschmelze-Erzeugungsmitteln (1, 5) ausgestoßenen Kunststoffschmelze oder zur Einstellung der Liniengeschwindigkeit (LS)
aufweist,
wobei der Regler (30) Ist-Wert-Eingänge (30a)
- zur Erfassung des aktuellen Drehmomentes von zumindest einer Walze (11, 12, 15, 14), vorzugsweise aller Walzen, und optional des Wicklers (8);
- zur Erfassung der Drehzahl oder Umfangsgeschwindigkeit von zumindest einer Walze, vorzugsweise aller Walzen (11, 12, 15, 14); und
- zur Erfassung der vom Dickenmesser (23) gemessenen aktuellen Dicke (FD, FD1-FDn) der Kunststofffolien- oder Kunststoffplattenbahn (22)
aufweist,
wobei der Regler (30) Steuersignalausgänge (30c) aufweist, über die er
- aus den erfassten aktuellen Drehmomenten der Walzen (11, 12, 15, 14) errechnete Soll-Drehzahlsignale oder Soll-Umfangsgeschwindigkeitssignale (COS, C2S-CnS, CAS) an die Antriebe der Walzen (11,12,15,14) sendet;
- ein aus der Solldicke (SD) und den erfassten aktuellen Drehmomenten der Walzen (11, 12, 15, 14) errechnetes Glättspalt-Soll-Abstandssignal (GW) zur Verstellung des Glättspalts (13) ausgibt; und
- entweder - bei vorgegebener Liniengeschwindigkeit (LS) - aus der Soll-Dicke (SD) und der Ist-Dicke (FD) der Kunststofffolien- oder Kunststoffplattenbahn errechnete Soll-Kunststoffschmelze-Volumenstromsignale (SS) an die Kunststoffschmelze-Erzeugungsmittel sendet,
oder - bei vorgegebenem Kunststoffschmelze-Volumenstrom (SS) - aus der Soll-Dicke (SD) und der Ist-Dicke (FD) der Kunststofffolien- oder Kunststoffplattenbahn errechnete Soll-Liniengeschwindigkeitssignale (LS) und/oder daraus abgeleitete Soll-Umfangsgeschwindigkeitssignale (C1S) an die Antriebe der Walzen (12) sendet.

2. Vorrichtung nach Anspruch 1, **dadurch gekennzeichnet, dass** der Regler (30) bei vorgegebenem Kunststoffschmelze-Volumenstrom (SS) das Glättspalt-Soll-Abstandssignal (GW) und die Steuersignale für die Liniengeschwindigkeit (LS) bzw. die Steuersignale für die Umfangsgeschwindigkeiten oder Drehzahlen der Walzen so adaptiert, dass das Drehmoment von zumindest einer der Walzen (11, 12, 14, 15), vorzugsweise aller Walzen, und optional des Wicklers (8), unter einem Maximaldrehmoment und optional auch oberhalb eines Minimaldrehmoments liegt.

3. Vorrichtung nach Anspruch 1, **dadurch gekennzeichnet, dass** der Regler (30) bei vorgegebener Liniengeschwindigkeit (LS) das Steuersignal für den Kunststoffschmelze-Volumenstrom (SS) und die Steuersignale für die Umfangsgeschwindigkeiten oder Drehzahlen für jene Walzen (11, 14, 15), und optional den Wickler (8), mit Ausnahme jener Walze (12), deren Umfangsgeschwindigkeit das Maß für die Liniengeschwindigkeit (LS) definiert, so adaptiert, dass das Drehmoment von zumindest einer der Walzen (11, 12, 14, 15), vorzugsweise aller Walzen, und optional des Wicklers (8) unter einem Maximaldrehmoment und optional auch oberhalb eines Minimaldrehmoments liegt.

4. Vorrichtung nach einem der vorhergehenden Ansprüche, **dadurch gekennzeichnet, dass** die Düsenspaltverstelleinrichtung (26) entweder manuell oder automatisch betätigbar ist, oder eine manuelle Grundeinstellung und eine automatische Feineinstellung vorsieht.

5. Vorrichtung nach einem der vorhergehenden Ansprüche, **dadurch gekennzeichnet, dass** die Sollwert-Eingänge (30b) des Reglers (30) die Einstellung der Zugkraft (PW) des Wicklers (8) umfassen und der Regler (30) diese in die Berechnung der Steuersignale mit einbezieht.

6. Vorrichtung nach einem der vorhergehenden Ansprüche, **dadurch gekennzeichnet, dass** die Kunststoffschmelze-Erzeugungsmittel zumindest einen Extruder (1), insbesondere einen Einschnecken-, Doppelschnecken- oder Mehrschneckenextruder, umfassen.

7. Vorrichtung nach einem der vorhergehenden Ansprüche, **dadurch gekennzeichnet, dass** die Kunststoffschmelze-Erzeugungsmittel zumindest einen Schmelzereaktor (5) mit Austragspumpe aufweisen.

8. Vorrichtung nach einem der vorhergehenden Ansprüche, **dadurch gekennzeichnet, dass** zwischen den Kunststoffschmelze-Erzeugungsmitteln und der Breitschlitzdüse ein Filter (3) und/oder eine Schmelzepumpe (4) angeschlossen ist/sind.

9. Vorrichtung nach einem der vorhergehenden Ansprüche, **dadurch gekennzeichnet, dass** die Breitschlitzdüse (10) über ihre Breite in mehrere Zonen (1 bis n) unterteilt ist, in denen die jeweiligen Abschnitte der Düsenlippen (10a, 10b) einzeln im Abstand voneinander verstellbar sind.

10. Vorrichtung nach einem der vorhergehenden Ansprüche, **dadurch gekennzeichnet, dass** zur Abstandsverstellung der Düsenlippen oder Düsenlippen-Abschnitte über die Breite der Breitschlitzdüse (10) verteilte temperierbare Dehnbolzen (26) angeordnet sind, deren Länge mit ihrer Temperatur variiert, wobei die Dehnbolzen (26) einerseits an einer Düsenlippe und andererseits an einem feststehenden Maschinenteil angebracht sind.

11. Vorrichtung nach einem der Ansprüche 1 bis 9, **dadurch gekennzeichnet, dass** zur Abstandsverstellung der Düsenlippen oder Düsenlippen-Abschnitte über die Breite der Breitschlitzdüse (10) verteilte, motorisch verstellbare Gewindebolzen vorgesehen sind, wobei entweder jedem Gewindebolzen ein angesteuerter Motor zugeordnet ist, oder ein verfahrbarer Motor vorgesehen ist, der automatisch von Gewindebolzen zu Gewindebolzen bewegbar ist und diese nacheinander verstellt.

12. Vorrichtung nach einem der vorhergehenden Ansprüche, **dadurch gekennzeichnet, dass** eine Glättwalze (11) des den Glättspalt (13) bildenden Glättwalzenpaares (11,12) auf einem beweglichen Hebel (17) gelagert ist, der mittels eines Aktuators (18) um einen Drehpunkt (19) schwenkbar ist.

13. Vorrichtung nach einem der Ansprüche 1 bis 11, **dadurch gekennzeichnet, dass** eine Glättwalze (11) des den Glättspalt (13) bildenden Glättwalzenpaares (11,12) linear verschiebbar gelagert ist.

14. Vorrichtung nach Anspruch 12 oder 13, **dadurch gekennzeichnet, dass** der Schwenkbereich des Hebels (17) bzw. die lineare Verschiebbarkeit der Glättwalze (11) durch einen verstellbaren Anschlag (20,27) begrenzt ist, wobei vorzugsweise der verstellbare Anschlag (20,27) ein drehbar gelagerter Volumskörper (20) ist, dessen Dicke, das ist der Abstand der Außenfläche des Volumskörpers (20) zur Drehachse (27), abhängig vom Verdrehwinkel des Volumskörpers ist.

15. Vorrichtung nach Anspruch 12 oder 13, **dadurch gekennzeichnet, dass** der Schwenkbereich des Hebels (17) bzw. die lineare Verschiebbarkeit der Glättwalze (11) durch einen verstellbaren Anschlag begrenzt ist, der als Spindelantrieb ausgeführt ist.

16. Vorrichtung nach Anspruch 12, **dadurch gekennzeichnet, dass** der Aktuator (18), der den Hebel (17) bewegt, als Pneumatik- oder Hydraulikzylinder oder als Rotationsantrieb ausgeführt ist, das vorzugsweise größer ist als das vom Glättspalt resultierende Gegendrehmoment.

17. Vorrichtung nach einem der vorhergehenden Ansprüche, **dadurch gekennzeichnet, dass** der Dickenmesser (23) entweder als stationärer Dickenmesser ausgebildet ist, der die Dicke der Kunststofffolien- oder Kunststoffplattenbahn (22) über deren gesamte Breite oder nur in einem Teilbereich misst, oder als stationärer Dickenmesser ausgebildet ist, der in mehrere Messzonen (1 bis n) unterteilt ist und die Dicke der Kunststofffolien- oder Kunststoffplattenbahn (22) abschnittsweise über deren gesamte Breite misst, oder der Dickenmesser als die Breite der Folie traversierender Dickenmesser ausgebildet ist.

18. Vorrichtung nach einem der vorhergehenden Ansprüche, **dadurch gekennzeichnet, dass** der Dickenmesser (23) kapazitive oder induktive Sensoren, optische Sensoren, Sensoren, die den Abstand der Folienoberfläche zu einer Umlenkwalze ermitteln, oder Röntgen-Transmissionssensoren aufweist.
